# EUROPÄISCHE PATENTSCHRIFT

(11) **EP 1 196 902 B1**
(45) Veröffentlichungstag und Bekanntmachung des Hinweises auf die Patenterteilung: **08.09.2004**
(21) Anmeldenummer: 00943867.2
(22) Anmeldetag: 23.06.2000
(51) Int. Cl.: G07F 7/10

(54) **VERFAHREN ZUM BETREIBEN EINES ZUR AUSFÜHRUNG VON NACHLADBAREN FUNKTIONSPROGRAMMEN AUSGEBILDETEN DATENTRÄGERS**
METHOD FOR OPERATING A PORTABLE DATA CARRIER CONFIGURED FOR EXECUTING RELOADABLE FUNCTIONAL PROGRAMS
PROCEDE POUR FAIRE FONCTIONNER UN SUPPORT DE DONNEES CONFIGURE POUR EXECUTER DES PROGRAMMES FONCTIONNELS RECHARGEABLES

(30) Priorität: 25.06.1999 DE 19929164
(43) Veröffentlichungstag der Anmeldung: 17.04.2002
(73) Patentinhaber: Giesecke & Devrient GmbH, 81677 München (DE)
(72) Erfinder: KOLBECK, Alexander, D-82362 Weilheim (DE); STOCKER, Thomas, D-81673 München (DE); FREY, Thomas, D-85560 Ebersberg (DE); WEISS, Dieter, D-81677 München (DE); MERCK, Martin, D-81677 München (DE)
(74) Vertreter: Klunker . Schmitt-Nilson . Hirsch
(86) Internationale Anmeldenummer: PCT/EP2000/005795
(87) Internationale Veröffentlichungsnummer: WO 2001/001357

(56) Entgegenhaltungen:
- EP-A- 0 949 595
- WO-A-98/09257
- DE-A- 19 718 115
- DE-A- 19 723 676

## Beschreibung

Die Erfindung geht aus von einem Verfahren nach der Gattung des Hauptanspruchs.

Datenträger in Form von Chipkarten werden in einer zunehmenden Vielfalt von Anwendungsbereichen eingesetzt. Besonders verbreitet sind Karten gemäß der Norm ISO 7810, die aus einem Kunststoffträger bestehen, in den eine integrierte Halbleiterschaltung sowie Kontaktmittel zum Herstellen elektrischer Verbindungen mit einem entsprechenden Lesegerät eingebracht sind. Vorgeschlagen wurde auch, den Kartenträger zu verkleinern oder ganz fortzulassen, und stattdessen beispielsweise ein Einchip-Mikrocontroller in Armbanduhren, Schmuckstücke, Kleidungsstücke oder andere Gebrauchsgegenstände einzubauen. Der Begriff "Chipkarte" soll sich daher auf alle derzeitigen und zukünftigen transportablen (Klein-)Gegenstände erstrecken, in welche ein Mikrocontroller eingebettet ist, um es ihrem Besitzer oder Inhaber zu ermöglichen, chipkartentypische Interaktionen mit entsprechenden dafür vorgesehenen Interaktionsstationen vorzunehmen. Typische Chipkartenanwendungen sind die Kreditkarte, die Geldkarte, die Krankenversicherungskarte oder die Telefonkarte. Unter "Anwendung" wird dabei die Gesamtheit aller Daten, Befehle, Abläufe, Zustände, Mechanismen und Algorithmen innerhalb einer Chipkarte verstanden, die erforderlich sind, um eine Chipkarte im Rahmen eines Systems, beispielsweise eines Kreditkartenzahlungssystem, zu betreiben.

Üblicherweise entspricht jeder Anwendung eine eigene Chipkarte und liefert jede neue Anwendung sowie jedes Update einer bestehenden Anwendung ebenfalls eine neue Chipkarte. Grundsätzlich wünschenswert ist deshalb eine Chipkarte, die für eine Vielzahl von Anwendungen unterschiedlicher Diensteanbieter und unterschiedlicher Betreiber von Kartensystemen, wie Kreditkartenorganisationen, Banken, Versicherungen, Telefongesellschaften usw., genutzt werden kann.

Eine Dateiorganisation für eine solche für mehrere Anwendungen geeigneten Chipkarte ist aus Rankl/Effing, "Handbuch der Chipkarten", Carl Hanser Verlag, 1996, Kapitel 5.6, entnehmbar. Die darin beschriebene Organisationsstruktur beruht auf der ISO/IEC-Norm 7816-4. An der Spitze der Dateistruktur steht dabei ein "Masterfile", das die Verzeichnisse aller anderen auf der Chipkarte vorhandenen Dateien enthält. Dem Masterfile sind ein oder mehrere "Dedicated Files" nachgeordnet, welche die Dateinamen von in Gruppen zusammengefaßten, insbesondere die zu einer Anwendung gehörenden Dateien enthalten. Jedem Dedicated File sind schließlich ein oder mehrere "Elementary Files" untergeordnet, in denen die Nutzdaten einer Anwendung liegen. Als technisch möglich, aber aus Gründen der Sicherheit nicht zweckmäßig beschreibt die Schrift desweiteren das Nachladen von Programmcode. Als vielversprechendste Maßnahme zur Überwindung der Sicherheitsbedenken verweist sie auf.die Einrichtung einer "Memory Management Unit", welche auszuführenden Programmcode auf Einhaltung der zugewiesenen Grenzen überwacht.

Aus der Druckschrift WO-Al-98/09257 sind ein System und ein Verfahren zum Laden von Anwendungen auf eine Chipkarte bekannt, die es erlauben, zusätzlich zu den Daten bereits geladener Anwendungen Programm- und Anwendungsdaten weiterer Anwendungen in eine Chipkarte zu bringen. Dabei sind Vorkehrungen auf der Grundlage geeigneter kryptographischer Techniken getroffen worden, die eine Verifizierung der Befugnis der das Nachladen von Daten betreibenden Stelle gestatten. Nachdem die Daten einer zusätzlichen Anwendung in den Speicher der Chipkarte gelangt sind, wird die Authentizität der dazugehörigen Programmdaten überprüft. Sodann werden die Programmdaten hinsichtlich ihrer Syntax sowie geltender Typenbeschränkungen geprüft. Wird bei einem dieser Prüfschritte eine Unstimmigkeit festgestellt, werden die zusätzlich geladenen Daten verworfen und im Speicher gelöscht. Das bekannte System erlaubt ein kontrolliertes Nachladen von Anwendungen auch nach Ausgabe der Karte an den Endanwender. Es bedingt allerdings, daß ein Kartenausgeber, der eine Chipkarte mit verfügbarem, freiem Speicherplatz etwa an einen Diensteanbieter abgibt, selbst bereits die Identität aller Stellen des Diensteanbieters kennen muß, die später einmal berechtigt sein sollen, einem Endnutzer Anwendungen zum Nachladen anzubieten. Das kann dadurch geschehen, daß der Kartenausgeber bestimmte öffentliche Signaturschlüssel von Diensteanbietern zertifiziert, um durch Hinterlegung seines eigenen öffentlichen Signaturschlüssels, etwa in der ROM-Maske der Chipkarte, eine Überprüfung der Authentizität nachgeladener Daten leisten zu können. Ein Kartenausgeber hat bei dem bekannten System allerdings keine Möglichkeit, über die Authentizität und die syntaktische Korrektheit hinaus das von den Diensteanbietern belegte Speichervolumen auf einer einzelnen Chipkarte zu kontrollieren.

Aus der DE 197 23 676 A1 sind ein Verfahren bzw. ein Datenträger nach der Gattung der unabhängigen Ansprüche 1, 4, 8 und 12 entnehmbar, nachdem Programme problemlos relokierbar auf Chipkarten geladen werden können. Nachgeladene Programme werden dabei durch das auf der Chipkarte vorhandene Betriebssystem auf freie verfügbare physikalische Adressen bzw. physikalische Segmente gelegt. Zugleich wird eine Tabelle angelegt, mit deren Hilfe anschließend eine Zuordnung zwischen den physikalischen Adressen und den logischen Adressen hergestellt wird. Das Verfahren gestattet es, Programme auf eine Chipkarte nachzuladen, ohne die auf der Karte vorhandene Speicherbelegung kennen zu müssen. Auf die Frage der Sicherheit, z. B. hinsichtlich unerlaubter Zugriffe auf fremde Speicheradressen geht die Schrift nicht ein. Auch wird nicht sichergestellt, daß einem Anwender, der ein Programm auf eine Chipkarte nachladen möchte, hierfür ausreichend Platz zur Verfügung steht.

Aus der DE 19718115 A1 sind ferner eine Chipkarte sowie ein Verfahren zum Laden von Daten auf eine Chipkarte bekannt, welche es ermöglichen, auch nach Abschluß des Kartenherstellungsprozesses Kartenapplikationen auf eine Chipkarte zu bringen. Hierzu wird auf der Chipkarte ein Containerspeicherraum angelegt; in welchen Diensteanbieter eigene Applikationen laden können. In dem Containerspeicherraum ist dabei die Programmgrundstruktur nachladbarer Applikationen vorabdefiniert; nachgeladen werden nur noch applikationsspezifische Daten und Schlüssel. Durch die Vorabdefinition der Strukturen ladbarer Applikationen wird eine sichere Separation von Daten verschiedener Diensteanbieter auf einer Karte erreicht. Das Nachladen von Applikationen mit unbekannter Datenstruktur sieht die Schrift nicht vor. Generell sind für die Verwaltung des Containerspeicherraums Alternativen zur Vorabdefinition von Applikationsstrukturen nicht beschrieben. Das Konzept der Vorabdefinition von Applikationsstrukturen ist nicht einsetzbar, wenn nachträglich Programmcode unbestimmten Umfanges auf eine Karte geladen werden sollen. Für das nachträgliche Aufbringen kompletter Programmcodes von Applikationen ist die aus der DE 197 18 115 A1 entnehmbare Lösung daher nicht geeignet.

Der Erfindung liegt die Aufgabe zugrunde, ein Verfahren zum Einbringen einer zusätzlichen Anwendung auf eine Chipkarte sowie eine Chipkarte anzugeben, die die genannten Nachteile des Standes der Technik vermeiden.

Diese Aufgabe wird erfindungsgemäß gelöst durch ein Verfahren mit den in Anspruch 1 angegebenen Merkmalen sowie durch eine Chipkarte mit den Merkmalen des unabhängigen Anspruchs 4. Die Aufgabe wird ebenfalls gelöst durch ein Verfahren mit den in Anspruch 8 angegebenen Merkmalen sowie durch eine Chipkarte mit den Merkmalen des unabhängigen Anspruchs 12. Die Gegenstände der Patentansprüche 1 und 4 einerseits sowie 8 und 12 andererseits haben jeweils eigenständige erfinderische Bedeutung, die Verfahren gemäß den Ansprüchen 1 und 8 sowie die Gegenstände der Ansprüche 4 und 12 lassen sich aber auch verbinden.

Das erfindungsgemäße Verfahren gemäß Anspruch 1 und ebenso das Verfahren gemäß Anspruch 8 erlauben es einem Kartenherausgeber in vorteilhafter Weise, einem Anwender das eigenmächtige, nachträgliche Einbringen von Funktionsprogrammen in eine Karte zu gestatten. Der Kartenausgeber muß nicht mehr vorab festlegen, welche Anwender oder Diensteanbieter eine Erlaubnis zum Nachladen von zusätzlichen Anwendungen auf bestimmte Chipkarten erhalten sollen. Das Nachladen einer Anwendung ist vielmehr auch dann möglich, wenn die Chipkarte bereits ausgegeben ist und sich im Besitz des Anwenders befindet. Das Verfahren eignet sich deshalb insbesondere dafür, eine vertragliche Abtretung genau umreißbarer Rechte an Speicherressourcen von Chipkarten an Dritte durch einen Chipkartenausgeber umzusetzen.

Das Verfahren gewährleistet dabei einen hohen Sicherheitsstandard. Gemäß Anspruch 1 wird er erreicht, indem zum Nachladen von Anwendungsfunktionsprogrammen befähigende Ladeapplikationen nur über eine vom Kartenherausgeber auf der Karte eingerichtete Häuptladerschnittstelle auf die Karte gebracht werden können. Mittels der Hauptladerschnittstelle lassen sich vorteilhaft insbesondere die physikalische Lage sowie der logische Wirkungsbereich eines nachgeladenen Funktionsprogrammes genau definieren. Die Schaffung einer Möglichkeit zum Nachladen von Funktionsprogrammen vereinfacht in vorteilhafter Weise zudem die Fertigung der entsprechenden Karten.

Das Ausweissystem nach Anspruch 8 bietet den Vorteil, daß der Kartenherausgeber das Volumen des Speicherplatzes kontrollieren kann, das einzelnen Anwendern für nachladbare Anwendungen zur Verfügung stehen soll. Das Ausweissystem bietet desweiteren die Möglichkeit zur Einrichtung eines anwendungsbezogenen Kostensystems. Beispielsweise kann vorgesehen sein, einen Anwender oder Diensteanbieter in dem Maße an den Gesamtkosten einer Chipkarte zu beteiligen, in dem er die Speichereinrichtung der Chipkarten belegt.

Vorteilhafte Weiterbildungen und zweckmäßige Ausgestaltungen des vorgeschlagenen Verfahrens bzw. der vorgeschlagenen Chipkarte sind den abhängigen Ansprüchen entnehmbar.

Die Erfindung wird im folgenden unter Bezugnahme auf die Zeichnung anhand eines Ausführungsbeispieles exemplarisch und in nicht beschränkender Weise näher erläutert.

In der Zeichnung zeigen
- Fig. 1: den strukturellen Aufbau einer Mikroprozessorchipkarte,
- Fig. 2: schematisch die Belegung der Speichereinrichtung einer Chipkarte mit einem Hauptlader,
- Fig. 3: die Belegung der Speichereinrichtung nach dem Laden eines Spezialladers,
- Fig. 4: eine schematische Darstellung der hierarchischen Struktur aus einem Hauptlader und mehreren Spezialladern.

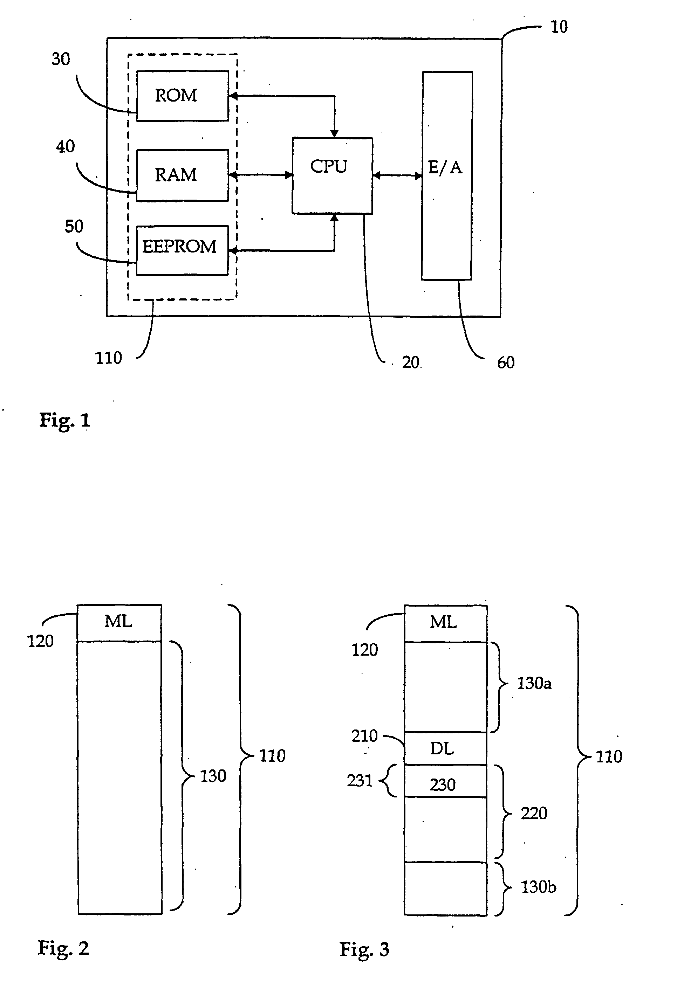

Fig. 1 zeigt den typischen Aufbau einer mit einem Mikroprozessor ausgerüsteten Chipkarte 10. Hauptelement bildet eine zentrale Prozessoreinheit 20, welche der Chipkarte 10 durch Ausführung von Funktionsprogrammen ihre Funktionalität verleiht. Der Prozessoreinheit 20 ist eine aus drei Speicherschaltungen 30, 40, 50 aufgebaute Speichereinrichtung 110 zugeordnet. Dabei repräsentiert die Speicherschaltung 30 einen maskenprogrammierten Nur-Lese-Speicher (ROM), worin sich insbesondere das Betriebssystem der zentralen Prozessoreinheit 20 befindet, die Speicherschaltung 50 einen elektrisch löschbaren Nur-Lese-Speicher 50 (EEPROM) zur Aufnahme der Programmcodes von Funktionssprogrammen sowie von durch die zentrale Prozessoreinheit 20 benutzten Daten, die Speicherschaltung 40 einen, in der Regel flüchtigen, Schreib-Lese-Speicher 40 (RAM) zur Nutzung als Arbeitsspeicher bei der Ausführung eines Funktionsprogrammes. Eine Kartenfunktionalität ergibt sich aus der Gesamtheit der in den Speicherschaltungen 30, 40, 50 enthaltenen Programmcodes bzw. Daten. Die Speicherschaltungen 30, 40, 50 können dabei, falls dies technisch notwendig oder zweckmäßig ist, übergreifend genutzt werden, etwa indem bestimmte Speicheradreßbereiche im EEPROM für Programmdaten des Betriebssystems benutzt werden oder Speicheradreßbereiche im ROM mit Anwendungsdaten belegt sind. Aus diesem Grund werden die Speicherschaltungen 30, 40, 50 nachfolgend stets gesamtheitlich als Speichereinrichtung 110 aufgefaßt. Zum Austausch von Daten mit externen Einrichtungen besitzt die Karte 10 desweiteren eine Datenübertragungseinrichtung 60, die ebenfalls mit der zentralen Prozessoreinheit 20 verbunden ist. Eine typische Anwendung der gezeigten Karte 10 bildet die Ausführung elektronischer Zahlungsvorgänge. Eine detaillierte Beschreibung der in Fig. 1 dargestellten Chipkarte findet sich im übrigen z.B. in Rankl/Effing, "Handbuch der Chipkarten", Carl Hanser Verlag, 1996, Kapitel 2.3.

Eine erste Ausgestaltung der Erfindung beruht auf dem Konzept, das Einbringen von Ladeapplikationen, welche ihrerseits Anwendungsfunktionsprogramme laden können, auf eine Karte zuzulassen, die Einrichtung der Ladeapplikationen selbst dabei aber ausschließlich einer speziellen Laderschnittstelle zu gestatten. Fig. 2 veranschaulicht schematisch die Belegung der Speichereinrichtung 110 einer Chipkarte, welche zunächst nur den Programmcode eines einzelnen Funktionsprogrammes 120 umfaßt, das eine erste Laderschnittstelle 120 definiert. Die Laderschnittstelle 120 ist speziell dazu ausgebildet, Funktionsprogramme in die Speichereinrichtung 110 nach zuladen, die Ladeapplikationen realisieren, d.h. die ihrerseits Ladefunktionalität besitzen und das Nachladen von Anwendungsfunktionsprogrammen ermöglichen. Die Laderschnittstelle 120 bildet zweckmäßig eine Grundausstattung einer Chipkarte und wird vom Kartenherausgeber oder Kartenhersteller auf die Karte gebracht. Die im folgenden als Hauptlader (ML) bezeichnete Laderschnittstelle 120 belegt einen Teil des gesamten in der Speichereinrichtung 110 zur Verfügung stehenden Speicherbereiches. Das den Hauptlader 120 realisierende Funktionsprogramm kann dabei insbesondere Bestandteil des Betriebssystems der Chipkarte und entsprechend als Teil des maskenprogrammierten Codes im Nur-Lese-Speicher (ROM) 30 ausgeführt sein. Ein anderer Teil des Gesamtspeicherbereiches ist zunächst nicht mit Daten belegt und steht als Freispeicher 130 für noch zu ladende weitere Funktionsprogramme zur Verfügung. Die Verwaltung des gesamten Freispeichers 130 erfolgt zunächst durch den Hauptlader 120. In dieser Funktion als Verwaltungseinrichtung steuert der Hauptlader 120 insbesondere das Laden des Programmcodes des ersten nachzuladenden Funktionsprogrammes in den Freispeicher 130 und die Zuteilung von Adreßräumen an diesen. Der Bytecode des ersten wie auch aller weiteren nachgeladenenen Funktionsprogramme wird in Form geeigneter elektrischer Signale über die Datenschnittstelle 60 übermittelt.

Der Hauptlader 120 lädt bevorzugt nur solche Funktionsprogramme in die Speichereinrichtung 110, die definierte Sicherheitsvoraussetzungen erfüllen. Beim Laden prüft er dazu vorzugsweise Integrität und Authentizität einer zu ladenden Ladeapplikation durch Prüfung, ob der zum Laden anstehende Programmcode unverändert in einer vom Hersteller gebilligten Form vorliegt, oder ob der Hersteller einer Ladeapplikation tatsächlich zum Einbringen der Ladeapplikation befugt ist, indem er zum Beispiel vom Kartenausgeber ein Recht zur Nutzung von Chipkarten-Ressourcen erworben hat.

Fig. 3 zeigt die Speicheranordnung aus Fig. 2, wobei der Hauptlader 120 jetzt ein erstes, eine Ladeapplikation realisierendes Funktionsprogramm 210 in den Freispeicher 130 geladen hat. Die Ladeapplikation 210 definiert eine zweite, im folgenden als Speziallader 210 (DL) bezeichnete Schnittstelle. Sie erlaubt es, nachfolgend weitere Funktionsprogramme in die Speichereinrichtung 110 zu bringen. Dafür steht ihr jedoch nur ein definierter, nicht erweiterbarer Verfügungsadreßraum 220 bereit. Der Verfügungsadreßraum 220 wird dem Speziallader 210 vom Hauptlader 120 beim Laden des Spezialladers 210 zugeteilt. Mit Zuteilung geht dabei die Verwaltung des Verfügungsadreßraumes 220 vollständig an den Speziallader 210 über, der hierzu wie der Hauptlader 120 über die notwendige Funktionalität als Verwaltungseinrichtung verfügt. Der Hauptlader 120 hat auf die weitere Nutzung des dem Speziallader 210 zugeordneten Verfügungsadreßraumes 220 keinen Einfluß und keine Zugriffsmöglichkeit mehr.

Weiterhin unter Verwaltung des Hauptladers 120 verbleibt der nicht durch Übernahme von Spezialladern 210 und Zuteilung von Verfügungsadreßräumen 220 belegte und in separate Abschnitte 130a, 130b fragmentierte Teil des Freispeicheradreßraumes.

Das Laden eines Spezialladers 210 kann, im Unterschied zum Hauptlader 120, durch den Anwender einer Karte erfolgen. Der Speziallader 210 ermöglicht es und ist Voraussetzung dafür, daß der Anwender nachfolgend Anwendungen realisierende Funktionsprogramme nach eigener Wahl in den Verfügungsadreßraum 220 laden kann. Unter Anwendung wird dabei die Gesamtheit aller Daten, Befehle, Abläufe, Zustände, Mechanismen und Algorithmen zum Betrieb einer Chipkarte verstanden, die erforderlich ist, um die Chipkarte im Rahmen einer Anwendung zu betreiben. Bei der Übernahme neuer, Anwendungen realisierender Funktionsprogramme in den Verfügungsadreßraum 220 stellt der Speziallader 210 sicher, daß der Programmcode eines geladenen Funktionsprogrammes keinesfalls auf außerhalb des Verfügungsadreßraumes 220 liegenden Datencode zugreifen kann. Der einem Speziallader 210 zugeteilte Verfügungsadreßraum 220 kann dabei schon beim Laden durch den Hauptlader 120 mit Sicherungen versehen worden sein, die einen physikalischen oder logischen Zugriff auf außerhalb des Verfügungsadreßraumes 220 liegende Teilbereiche der Speichereinrichtung 110 verhindern. Die Aufteilung des Verfügungsadreßraumes 220 auf nachgeladene Funktionsprogramme erfolgt durch den Speziallader 210. Einem Funktionsprogramm 230 zur Realisierung einer neuen Kartenanwendung kann dabei beispielsweise ein Teilbereich 231 des Verfügungsadreßraumes 220 zugewiesen worden sein.

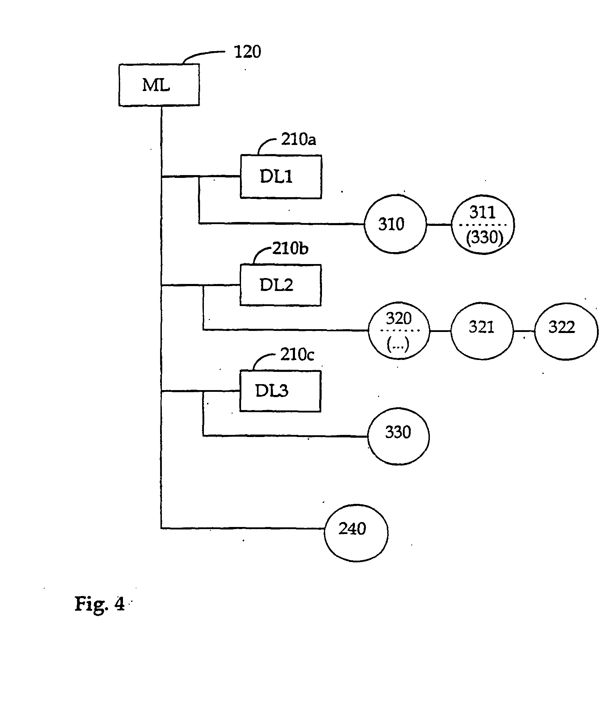

In einer besonders für eine Überlassung von Speicherbereich an Dritte günstigen Ausprägung der vorstehend beschriebenen Struktur ist die Belegung der Speichereinrichtung 110, wie in Fig. 4 gezeigt, hierarchisch strukturiert und können nachgeladene Funktionsprogramme die Möglichkeit erhalten, in definierter Weise auf bereits in der Speichereinrichtung 110 vorhandene andere Funktionsprogramme zuzugreifen. Die angedeutete Baumstruktur veranschaulicht dabei die zeitliche Abfolge des Einbringens der unterschiedlichen Funktionsprogramme. Im Minimalzustand ist die Karte nur mit einem Hauptlader 120 ausgestattet, er bildet zunächst den einzigen Zugang zur Speichereinrichtung 110 der Karte. Der Hauptlader 120 ermöglicht das Laden von Spezialladern 210a, 210b, 210c sowie von allgemeinen Funktionen bzw. Kartengrundfunktionen realisierenden Funktionsprogrammen 240. Befindet sich ein Hauptlader 120 auf einer Karte, können Speziallader 210 und Funktionsprogramme 240 zu beliebigen Zeitpunkten über den Hauptlader 120 geladen werden, sie sind in der Baumstruktur der Figur 4 daher als vom Hauptlader ausgehende, parallele Pfade dargestellt.

Alle neu geladenen Funktionsprogramme 210, 240 werden beim Laden durch den Hauptlader 120 auf Zulässigkeit und Sicherheit geprüft. Nur positiv geprüfte Funktionsprogramme werden geladen. Geladenen Spezialladern 210 a,b,c teilt der Hauptlader 120 in der Speichereinrichtung 110 jeweils einen unverrückbar lagedefinierten, durch den zugehörigen Speziallader 210 nicht erweiterbaren Verfügungsadreßraum 220 zu. Das den Speziallader 210 realisierende Funktionsprogramm kann dabei Informationen zur Größe des benötigten Verfügungsadreßraumes 220 enthalten. Erhält der Hauptlader 120 keine Größeninformationen, teilt er einen Standardverfügungsadreßraum zu.

Beim Laden von Funktionsprogrammen 210, 240 stellt der Hauptlader 120 sicher, daß die Verfügungsadreßräume 220 verschiedener Speziallader 210 logisch und physikalisch streng getrennt sind und ein Zugriff eines Spezialladers 210 auf den Verfügungsadreßraum 220 eines anderen Spezialladers 210 grundsätzlich nicht möglich ist. Nach Laden und Verfügungsadreßraumzuteilung geht die Kontrolle über den jeweiligen Verfügungsadreßraum 220 jeweils vollständig und ausschließlich auf den zugehörigen Speziallader 210a, 210b, 210c über. Jeder Speziallader 210 kann nun in den jeweils zugeteilten Verfügungsadreßraum 220 weitere Funktionsprogramme laden, insbesondere Funktionsprogramme, die Kartenanwendungen realisieren, etwa kryptographische Schlüssel oder Verfahren zu sicheren Durchführung von Finanztransaktionen. Den zu einem zu ladenden Funktionsprogramm gehörenden Bytecode unterwirft der Speziallader 210 beim Laden einer Sicherheits- und Zulässigkeitsprüfung.

Der Speziallader 210 ist ferner in Lage, neu zu ladende Funktionsprogramme definiert mit bereits vorhandenen zu verbinden ("linken"). Der Speziallader 210 legt dabei beim Laden eines Funktionsprogrammes dessen mögliche Zugriffsrechte und Verbindungsmöglichkeiten in Bezug auf andere, in der Speichereinrichtung 110 bereits vorhandene Funktionsprogramme definiert fest. Genauso kann er Beschränkungen einrichten, welche den Zugriff auf oder die Verbindung eines neu geladenen Funktionsprogrammes mit einem bereits vorhandenen oder noch nachladbaren Funktionsprogramm ausdrücklich unterbinden. Verbindungen bzw. Zugriffsbeschränkungen können dabei innerhalb des Verfügungsadreßraumes eines Spezialladers eingerichtet werden gelten, aber auch übergreifend auf die Verfügungsadreßräume anderer Speziallader.

Im Ausführungsbeispiel der Fig. 4 haben der Speziallader 210a zwei Funktionsprogramme 310, 311, der Speziallader 210b drei Funktionsprogramme 320, 321, 322, der Speziallader 210c ein weiteres Funktionsprogramm 330 geprüft, zugelassen und in den jeweils zugeteilten Verfügungsadreßraum 220 geladen. Das Nachladen der Funktionsprogramme 310, 311, 320, 321, 322, 330 kann, wenn der benötigte Speziallader 210 auf der Karte vorhanden ist, durch den Speziallader 210 zu beliebigen Zeitpunkten und in beliebiger Reihenfolge geschehen. In Figur 4 ist jedes nachgeladene Funktionsprogramm 310, 311, 320, 321, 322, 330 entsprechend dem jeweils ladenden Speziallader 210a, 210b bzw. 210c zugeordnet. Die Funktionsprogramme 310, 311, 320, 321, 322, 330 können, unter der Voraussetzung, daß dies beim Laden durch die jeweils eingeschalteten Speziallader 210 zugelassen wurde, aufeinander zugreifen oder miteinander verbunden werden. Im Beispiel der Fig.4 kann etwa das Funktionsprogramm 330 auf die Funktionsprogramme 321 oder 310 zugreifen, um etwa darin angelegte Prozeduren selbst zu verwenden. Keine Zugriffs- oder Verbindungsmöglichkeit hat das Funktionsprogramm 330 andererseits bezüglich der Funktionsprogramme 311, dieses ist infolge einer fehlenden entsprechenden Zugriffs- bzw. Verbindungserlaubnis für das Funktionsprogramm 330 gesperrt, oder 320, dieses ist für alle Fremdzugriffe gesperrt.

Komplementär zum Laden neuer Funktionsprogramme durch den Hauptlader 120 oder einen Speziallader 210 ist grundsätzlich auch das Löschen von in einer Speichereinrichtung 110 vorhandenen Funktionsprogrammen 210, 240, 310, 330 möglich. Die Berechtigung zum Löschen wird jeweils beim Laden eines Funktionsprogrammes durch den Lader 120, 210 eingerichtet. Das Löschen eines Spezialladers 210 ist nur möglich, wenn sich in dem ihm zugeteilten Verfügungsadreßraum 220 kein Funktionsprogramm mehr befindet. Der Hauptlader 120 kann nicht gelöscht werden.

Eine Maßnahme, welche eine risikoarme Überlassung von Chipkartenspeicherräum an Dritte vorteilhaft unterstützt, ist die Nutzung eines Ausweissystems für die Durchführung der Speicherraumzuteilung durch Hauptlader 120 und/oder Speziallader 210a, 210b, 210c. Die Ausweise haben dabei die Gestalt einer digitalen Information. Sie werden einem Speziallader 210 oder einem zu ladenden Funktionsprogramm beigegeben und beinhalten insbesondere eine Angabe über die Größe des gewünschten Verfügungsadreßraumes 220 bzw. die Größe des darin für das Funktionsprogramm benötigen Adreßraumes 230. Der Lader 120, 210, über den ein mit einem Ausweis versehener Speziallader bzw. ein mit einem Ausweis versehenes Funktionsprogramm 230 geladen werden soll, muß zur Auswertung des Ausweises fähig sein. Ein Ausweissystem kann für alle Lader 120, 210 einer Karte oder auch nur für einzelne eingerichtet sein; eine hierarchische Laderstruktur wie in Figur 3 gezeigt ist keine Voraussetzung für seine Einrichtung. Die Ausweise werden vom Chipkartenherausgeber oder dem Hersteller eines Laders 120, 210 generiert. Von jenem müssen sie auch für einen neu zu ladenden Speziallader 210 bzw. für ein neu in eine Speichereinrichtung 110 zu ladendes Funktionsprogramm vorab erworben werden. Der Laderhersteller/Kartenherausgeber ist auf diese Weise stets über die Belegung des seinem Lader 120/210 zugeordneten Verfügungsadreßraumes informiert. Indem er neu zu ladenden Spezialladern bzw. Funktionsprogrammen nur den unbedingt notwenigen Adreßraum zuweist, kann er dabei mittels einer entsprechenden Information auf dem Ausweis eine besonders speicherplatzssparende Nutzung eines zugeteilten Verfügungsadreßraumes sicherstellen.

Neben einer reinen Größeninformation kann ein Ausweis weitere Informationen enthalten, etwa Informationen, welche die Prüfung der Authentizität eines Ausweises ermöglichen. Echtheit und Fälschungssicherheit eines Ausweises werden weiter vorzugsweise durch kryptographische Verfahren gewährleistet. Die Informationen auf einem Ausweis sind hierbei verschlüsselt, der Ausweis enthält entsprechend beispielsweise einen Initialisierungsschlüssel, welcher es einem autorisierten Lader erlaubt, einen Schlüssel zum Lesen des Ausweises abzuleiten. Zweckmäßig enthält ein Ausweis ferner eine kryptographisch realisierte digitale Signatur. Zur Erleichterung der Verwaltung können auf einem Ausweis desweiteren beispielsweise die Bezeichnung eines Funktionsprogrammes, eine Anwendungskennung, ein Datum, o.ä. angelegt sein. Möglich ist weiterhin die Einrichtung von Informationen, welche die Nutzbarkeit eines Funktionsprogrammes beschränken; beispielsweise kann die zeitliche Nutzbarkeit einer Anwendung beschränkt werden, oder es können Kennungen von Karten angegeben sein, welche alleine zur Nutzung eines Funktionsprogrammes berechtigt sind.

## Patentansprüche

1. Verfahren zum Betreiben eines mit einer Datenübertragungseinrichtung, einer Speichereinrichtung sowie einer Programmausführungseinheit zur Ausführung von in der Speichereinrichtung enthaltenen Funktionsprogrammen ausgestatteten Datenträgers **gekennzeichnet durch** folgende Schritte:
- Installieren eines Funktionsprogrammes in der Speichereinrichtung (110) des Datenträgers, das eine Laderschnittstelle (120) realisiert, welche es ihrerseits ermöglicht, Funktionsprogramme nachzuladen, die jeweils eine Ladeapplikation (210) realisieren,
- Bereitstellen eines für die Laderschnittstelle (120) verfügbaren Freispeicherraumes (130) in der Speichereinrichtung (110),
- Nachladen mindestens einer Ladeapplikation (210) über die Datenübertragungseiririchtung (60) in die Speichereinrichtung (110), wobei das Nachladen von der Laderschnittstelle (120) kontrolliert wird, und wobei der Ladeapplikation (210) ein Teil des Freispeicherraums (130) als Verfügungsadreßraum (220) zugeteilt wird.

2. Verfahren nach Anspruch 1, **gekennzeichnet durch** folgenden weiteren Schritt:
Nachladen mindestens eines Anwendungsprogrammes (230) über die Datenübertragungseinrichtung (60) **durch** die Programmausführungseinheit unter der Kontrolle der Ladeapplikation (210) in den dieser zugeteilten Verfügungsadreßraum (220).

3. Verfahren nach Anspruch 1, **dadurch gekennzeichnet, daß** die Laderschnittstelle (120) die Kontrolle über einen einer Ladeapplikation (210) zugewiesenen Verfügungsadreßraum (220) an die Ladeapplikation (210) abgibt.

4. Datenträger mit
- einer Speichereinrichtung (110) zur Aufnahme von Funktions- und Anwendungsprogrammen, sowie
einer Programmausführungseinheit (20) zur Ausführung von in der Speichereinrichtung (110) enthaltenen Funktionsprogrammen,
- einer Datenübertragungseinrichtung (60),
**gekennzeichnet durch**
- eine als Funktionsprogramm realisierte Laderschnittstelle (120) zum Laden von mindestens einer das Nachladen eines weiteren Anwendungsprogrammes ermöglichenden Ladeapplikation (210) in die Speichereinrichtung (110) über die Datenübertragungseinrichtung (60),
- wobei der Laderschnittstelle (120) in der Speichereinrichtung (110) ein Freispeicherraum (130) zur Aufnahme mindestens einer Ladeapplikation zugeordnet ist.

5. Datenträger nach Anspruch 4, **dadurch gekennzeichnet, daß** eine in die Speichereinrichtung (110) aufgenommene Ladeapplikation (210) unabhängig von der Laderschnittstelle (120) einen Teil (220) des der Laderschnittstelle zugeordneten Freispeicherraums (130) kontrolliert.

6. Datenträger nach Anspruch 4, **dadurch gekennzeichnet, daß** die Ladeapplikationen (210) dazu ausgebildet sind, nachzuladene Anwendungsprogramme (330) während des Ladens mit auf dem Datenträger bereits vorhandenen Anwendungs- und Funktionsprogrammen zu verbinden.

7. Datenträger nach Anspruch 6, **dadurch gekennzeichnet, daß** eine Ladeapplikation (210) Beschränkungen beinhaltet, welche die Verbindung eines neuzuladenden Anwendungsprogrammes (330) mit einem bereits vorhandenen (311, 320) verbieten.

8. Verfahren zum Betreiben eines eine Speichereinrichtung zur Aufnahme von Funktions- und Anwendungsprogrammen, eine Programmausführungseinheit zur Ausführung von in der Speichereinrichtung enthaltenen Funktions- und Anwendungsprogrammen, sowie eine Datenübertragungseinrichtung aufweisenden Datenträgers **gekennzeichnet durch** folgende Schritte:
- Ausrüsten des Datenträgers mit einem eine Laderschnittstelle (120,210) realisierenden Funktionsprogramm zum Nachladen von Anwendungsprogrammen in die Speichereinrichtung,
- Ausrüsten des Datenträgers mit einer Verwaltungseinrichtung zum Zuteilen von Adreßräumen in der Speichereinrichtung (110) an nachgeladene Anwendungsprogramme,
- Versehen der nachzuladenen Anwendungsprogramme mit Ausweisen, welche eine Information über die Größe des für das Anwendungsprogramm benötigten Speicherplatzes enthalten,
- Auswerten des Ausweises beim Nachladen eines Anwendungsprogrammes, und
- Zuteilen eines auf die ermittelte Größeninformation abgestimmten Adreßraumes in der Speichereinrichtung (110) an das Anwendungsprogramm.

9. Verfahren nach Anspruch 8, **dadurch gekennzeichnet, daß** der Ausweis weiterhin eine das Anwendungsprogramm bezeichnende Information enthält.

10. Verfahren nach Anspruch 8, **dadurch gekennzeichnet, daß** der Ausweis weiterhin eine Signatur zum Nachweis der Echtheit des Anwendungsprogrammes enthält.

11. Verfahren nach Anspruch 8, **dadurch gekennzeichnet, daß** die Ausweise vom Herausgeber des Datenträgers ausgegeben werden.

12. Datenträger mit einer Speichereinrichtung (110) zur Aufnahme von Funktions- und Anwendungsprogrammen, einer Programmausführungseinheit (20) zur Ausführung von in der Speichereinrichtung enthaltenen Funktionprogrammen sowie einer Datenübertragungseinrichtung (60), **gekennzeichnet durch** eine als Funktionsprogramm realisierte Laderschnittstelle (120, 210) zum Nachladen von mindestens einem Anwendungsprogramm in die Speichereinrichtung über die Datenübertragungseinrichtung (60), wobei die Laderschnittstelle (120, 210) Mittel zum Prüfen eines Ausweises eines zu ladenden Anwendungsprogrammes aufweist und sie einem zu ladenden Anwendungsprogramm entsprechend einer auf dem Ausweis enthaltenen Größeninformation Speicherplatz in der Speichereinrichtung (110) zuteilt.

## Claims

1. A method for operating a data carrier equipped with a communication device, a memory device and a program execution unit for executing function programs contained in the memory device, **characterized by** the following steps:
- installing a function program in the memory device (110) of the data carrier for realizing a loader interface (120) which in turn makes it possible to reload function programs each realizing a load application (210),
- providing a free memory space (130) available for the loader interface (120) in the memory device (110),
- reloading at least one load application (210) via the communication device (60) into the memory device (110), said reloading being controlled by the loader interface (120), and the load application (210) being allotted a part of the free memory space (130) as an assigned address space (220).

2. A method according to claim 1, **characterized by** the following further step:
- reloading at least one application program (230) via the communication device (60) by the program execution unit under the control of the load application (210) into the assigned address space (220) allotted thereto.

3. A method according to claim 1, **characterized in that** the loader interface (120) gives the control over an assigned address space (220) allotted to a load application (210) to the load application (210).

4. A data carrier having
- a memory device (110) for receiving function and application programs,
- a program execution unit (20) for executing function programs contained in the memory device (110),
- a communication device (60),
**characterized by**
- a loader interface (120) realized as a function program for loading at least one load application (210), which permits the reloading of a further application program, into the memory device (110) via the communication device (60),
- the loader interface (120) having associated therewith in the memory device (110) a free memory space (130) for receiving at least one load application.

5. A data carrier according to claim 4, **characterized in that** a load application (210) received in the memory device (110) controls a part (220) of the free memory space (130) associated with the loader interface (120), independently of the loader interface.

6. A data carrier according to claim 4, **characterized in that** the load applications (210) are designed to link application programs (330) to be reloaded with application and function programs already present on the data carrier, during loading.

7. A data carrier according to claim 6, **characterized in that** a load application (210) comprises limitations which prohibit the linking of an application program (330) to be newly loaded with one already present (311, 320).

8. A method for operating a data carrier having a memory device for receiving function and application programs, a program execution unit for executing function and application programs contained in the memory device, and a communication device, **characterized by** the following steps:
- equipping the data carrier with a function program realizing a loader interface (120, 210) for reloading application programs into the memory device,
- equipping the data carrier with a management device for assigning address spaces in the memory device (110) to reloaded application programs,
- providing the application program to be reloaded with badges containing information about the size of the memory space required for the application program,
- evaluating the badge during reloading of an application program, and
- assigning to the application program an address space in the memory device (110) coordinated with the determined size information.

9. A method according to claim 8, **characterized in that** the badge furthermore contains information designating the application program.

10. A method according to claim 8, **characterized in that** the badge furthermore contains a signature for proving the authenticity of the application program.

11. A method according to claim 8, **characterized in that** the badges are issued by the issuer of the data carrier.

12. A data carrier having a memory device (110) for receiving function and application programs, a program execution unit (20) for executing function programs contained in the memory device, and a communication device (60), **characterized by** a loader interface (120, 210) realized as a function program, for reloading at least one application program into the memory device via the communication device (60), the loader interface (120, 210) having means for checking a badge of an application program to be loaded, and assigning memory space in the memory device (110) to an application program to be loaded in accordance with size information contained on the badge.

## Revendications

1. Procédé pour faire fonctionner un support de données équipé d'un dispositif de transmission de données, d'un dispositif de mémoire ainsi que d'une unité d'exécution de programmes pour exécuter des programmes fonctionnels contenus dans le dispositif de mémoire, **caractérisé par** les étapes suivantes :
- installation d'un programme fonctionnel dans le dispositif de mémoire (110) du support de données, qui réalise une interface de chargeur (120) permettant de recharger des programmes fonctionnels qui réalisent respectivement une application de chargement (210),
- mise à disposition dans le dispositif de mémoire (110) d'un espace de mémoire libre (130) disponible pour l'interface de chargeur (120),
- rechargement d'au moins une application de chargement (210) par le dispositif de transmission de données (60) dans le dispositif de mémoire (110), le rechargement étant contrôlé par l'interface de chargeur (120), et une partie de l'espace de mémoire libre (130) étant affectée à l'application de chargement (210) comme espace d'adresse disponible (220).

2. Procédé selon la revendication 1, **caractérisé par** l'autre étape suivante :
rechargement d'au moins un programme d'application (230) par le dispositif de transmission de données (60) par l'intermédiaire de l'unité d'exécution de programmes sous le contrôle de l'application de chargement (210) dans l'espace d'adresse disponible (220) étant attribué à celle-ci.

3. Procédé selon la revendication 1, **caractérisé en ce que** l'interface de chargeur (120) transfert le contrôle sur un espace d'adresse disponible (220) référencé par une application de chargement (210) à l'application de chargement (210).

4. Support de données comprenant
- un dispositif de mémoire (110) pour recevoir des programmes fonctionnels et applicatifs,
ainsi qu'une unité d'exécution de programmes (20) pour exécuter des programmes fonctionnels contenus dans le dispositif de mémoire (110),
- un dispositif de transmission de données (60), **caractérisé par**
- une interface de chargeur (120) réalisée comme programme fonctionnel pour charger dans le dispositif de mémoire (110), par l'intermédiaire du dispositif de transmission de données (60), au moins une application de chargement (210) permettant de recharger un autre programme d'application,
- un espace de mémoire libre (130) étant associé à l'interface de chargeur (120) dans le dispositif de mémoire (110) pour recevoir au moins une application de chargement.

5. Support de données selon la revendication 4, **caractérisé en ce qu'**une application de chargement (210) reçue dans le dispositif de mémoire (110) contrôle, indépendamment de l'interface de chargeur (120), une partie de l'espace de mémoire libre (130) associé à l'interface de chargeur.

6. Support de données selon la revendication 4, **caractérisé en ce que** les applications de chargement (210) sont configurées pour relier pendant le chargement des programmes d'application (330) à recharger à des programmes applicatifs et fonctionnels déjà présents sur le support de données.

7. Support de données selon la revendication 6, **caractérisé en ce qu'**une application de chargement (210) contient des restrictions interdisant la liaison d'un programme d'application (330) nouveau à charger avec un programme d'application (311, 320) déjà présent.

8. Procédé pour faire fonctionner un support de données présentant un dispositif de mémoire pour recevoir des programmes fonctionnels et applicatifs, une unité d'exécution de programmes pour exécuter des programmes fonctionnels et applicatifs contenus dans le dispositif de mémoire, ainsi qu'un dispositif de transmission de données, **caractérisé par** les étapes suivantes :
- équipement du support de données avec un programme fonctionnel réalisant une interface de chargeur (120, 210) pour recharger des programmes d'application dans le dispositif de mémoire,
- équipement du support de données avec un dispositif de gestion pour attribuer des espaces d'adresse dans le dispositif de mémoire (110) à des programmes d'application rechargés,
- affectation aux programmes d'application à recharger des identifications contenant une information concernant la grandeur de la place de mémoire nécessaire pour le programme d'application,
- évaluation des identifications lors du rechargement d'un programme d'application, et
- attribution au programme d'application d'un espace d'adresse dans le dispositif de mémoire (110) en fonction de l'information de grandeur déterminée.

9. Procédé selon la revendication 8, **caractérisé en ce que** l'identification contient en outre une information désignant le programme d'application.

10. Procédé selon la revendication 8, **caractérisé en ce que** l'identification contient en outre une signature pour prouver l'authenticité du programme d'application.

11. Procédé selon la revendication 8, **caractérisé en ce que** des identifications sont émises par l'éditeur du support de données.

12. Support de données comprenant un dispositif de mémoire (110) pour recevoir des programmes fonctionnels et applicatifs, une unité d'exécution de programmes (20) pour exécuter des programmes fonctionnels contenus dans le dispositif de mémoire, ainsi qu'un dispositif de transmission de données (60), **caractérisé par** une interface de chargeur (120, 210) réalisée comme programme fonctionnel pour recharger au moins un programme d'application dans le dispositif de mémoire par l'intermédiaire du dispositif de transmission de données (60), l'interface de chargeur (120, 210) présentant des moyens pour vérifier une identification d'un programme d'application à charger, et attribuant à un programme d'application à charger une place de mémoire dans le dispositif de mémoire (110) selon une information de grandeur contenue dans l'identification.
